# EUROPEAN PATENT SPECIFICATION

(11) **EP 1 359 783 B1**
(45) Date of publication and mention of the grant of the patent: **16.02.2005**
(21) Application number: 03015280.5
(22) Date of filing: 09.01.2002
(51) Int. Cl.: H04Q 7/38, H04Q 7/22

(54) **Method for selecting a combination of transport formats for transport channels in a mobile station and corresponding mobile station**
Verfahren zur Selektion einer Kombination von Übertragungsformaten für Übertragungskanäle in einer Mobilstation, sowie entsprechende Mobilstation
Procédé de sélection d' une combinaison de formats de transports pour canaux de transport dans une station mobile et station mobile correspondante

(30) Priority: 11.01.2001 FR 0100507
(43) Date of publication of application: 05.11.2003
(62) Divisional of application: 02364001.4
(73) Proprietor: Melco Mobile Communications Europe (SA), 35510 Cesson Sévigné (FR)
(72) Inventor: Belaiche, Vincent, 34280 La Grande Motte (FR); Bellec, Martial, 22100 Dinan (FR); Tancerel, Ludovic, 35133 Lecousse (FR)
(74) Representative: Bentz, Jean-Paul

(56) References cited:
- EP-A- 1 047 219
- WO-A-00/21321
- WO-A-00/28760
- WO-A-00/56095

## Description

### Field of invention:

The present invention takes place in a method for selecting a combination of transport formats for a composite channel comprising at least two transport channels in a mobile station. The invention finds its application most particularly in third-generation mobile telecommunication systems (UMTS) and is defined in the claims.

### Background of invention :

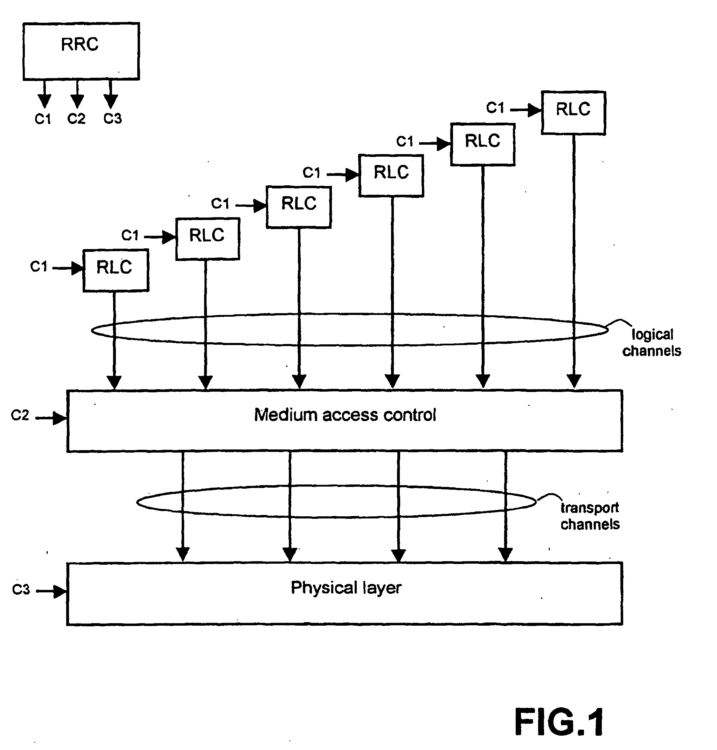

Third-generation mobile telecommunication systems will offer a large number of high bit rate multimedia-type services, such as Internet access or computer file transfer see for example EP-A-1 047 219. In such systems, the data exchanged are contained in transport channels. The set of transport channels transmitted by one and the same item of telecommunication equipment forms a composite channel situated within the physical layer. The data are transmitted within the transport channels during periodic intervals, commonly referred to as transmission time intervals or TTI intervals. They are transmitted according to a transport format which fixes the size and the number of data blocks to be transmitted during a given TTI interval. At the start of each TTI interval, a transport format is selected for each transport channel. Thus, the list of transport formats of the transport channels of the composite channel to be constructed forms a combination of transport formats. The selecting of a combination of transport formats is carried out in a medium access control unit of the mobile station. The term medium designates any information transmission support. Within the context of this document, we are dealing with the air interface. The medium access control unit forms part of the data link layer of the mobile station and its function is to coordinate access to the radio resources offered by the physical layer of the mobile station so as to share the transmission support between various applications as a function of the level of quality of service required by them. Figure 1 represents the first two layers of the OSI model (OSI standing for Open System Interconnection), namely the physical layer and the data link layer, for an item of telecommunication equipment. The physical layer is responsible for the coding and for the placing onto composite channels of the transport channels. The physical layer receives the transport channels originating from the medium access control unit of the data link layer. The medium access control unit receives, as input, logical channels originating from radio link control entities, commonly referred to as RLC entities. One or more logical channels may correspond to each transport channel. A radio resources control unit, commonly referred to as an RRC unit, controls the RLC entities, the medium access control unit and the physical layer by way of commands denoted C1, C2 and C3 respectively. The medium access control unit selects an appropriate transport format for each transport channel on the basis of a set of transport format combinations (or TFCS for Transport Format Combination Set) assigned by the RRC radio resources control unit and also selects the quantity of data of each logical channel to be transmitted on the associated transport channel during the corresponding TTI interval. These two operations are commonly designated by "Transport Format Combination (TFC) selection" in the current specifications relating to the UMTS standard.

To select a combination of transport formats, the medium access control unit is furnished with the following information:
- a connection radio frame number CFN (standing for Count Frame Number);
- information on the transport channels, namely
- the number NbTrCH of transport channels;
- the duration and the position of the TTI intervals of each transport channel;
- for each transport channel, a set TFS (for Transport Format Set) containing the possible transport formats; an index TFI (for Transport Format Indicator) is assigned to each transport format; each transport format is represented in the TFS set by a pair (number of blocks, size of the blocks); the size of the blocks is expressed in terms of bits and the product (number of blocks x size of block) then represents the instantaneous bit rate of the transport channel over a TTI interval for the transport format concerned; an exemplary TFS set is illustrated by the following table:

| TFI | TF |
|---|---|
| 0 | 0X148 |
| 1 | 1X148 |
| 2 | 2X148 |
| 3 | 3X148 |

- for each transport channel, the list of associated logical channels;
- information on the logical channels, namely:
- the number NbLC of logical channels;
- for each logical channel, the associated transport channel;
- a priority value MLP (standing for Mac Logical channels Priority) lying between 1 and 8 for each logical channel; a logical channel with priority value MLP equal to 1 has a higher degree of priority than that of a logical channel with priority value MLP equal to 2 or more; note that two logical channels may have the same priority value MLP;
- a parameter MODE for each logical channel; this parameter defines the mode of operation of the RLC entity of the logical channel concerned; this parameter can take one of the following 3 values: AM (standing for Acknowledge Mode), UM (standing for Unacknowledge Mode) or TM (standing for Transparent Mode); as far as selecting of combinations of transport formats is concerned, the processing of the logical channels of AM or UM mode is the same; the logical channels of AM or UM mode are differentiated from the TM mode channels by the fact that they provide a number of bits rather than a number of blocks of a given size; these bits may be grouped into one or more blocks of a size which will need to be determined during the selection of combination of transport formats; for a logical channel in TM mode, NB designates the number of blocks available in the associated RLC entity and BS (for Block Size) the size of these blocks; for a channel in AM or UM mode, NbBits designates the number of bits available in the associated RLC entity;
- for each logical channel in TM mode, a parameter Flag indicating the way in which the data blocks should be considered by the medium access control unit; this parameter can take two values: "OR" or "TO"; in the "OR" case, the data blocks should be taken in their entirety (NB or 0); if the medium access control unit cannot take all the data blocks, it does not take any of them; in the "TO" case, the medium access control unit can take all or some of the blocks (0 to NB).

Hereinbelow, any variable X specific to a logical channel LCj is denoted either X or X(LCj) when there is no ambiguity, for example the MODE parameter of logical channel LCj can be denoted MODE(LCj).

Among all these parameters, the MLP, MODE and Flag priority parameters are semistatic and can be modified with each reconfiguration of the system. On the other hand, the NB, BS and NbBits parameters are dynamic and can change with each TTI interval of the transport channel associated with the logical channel concerned. Obviously, the parameters NB and BS are matched with the transport formats of the TFS set of the associated transport channel and the Flag parameter, that is to say that, for each logical channel in TM mode taken independently of the others, there is at least one transport format for its associated transport channel which makes it possible to transport all or some of its data.

An exemplary configuration of the medium access control unit for the selecting of a combination of transport formats is given hereinbelow:

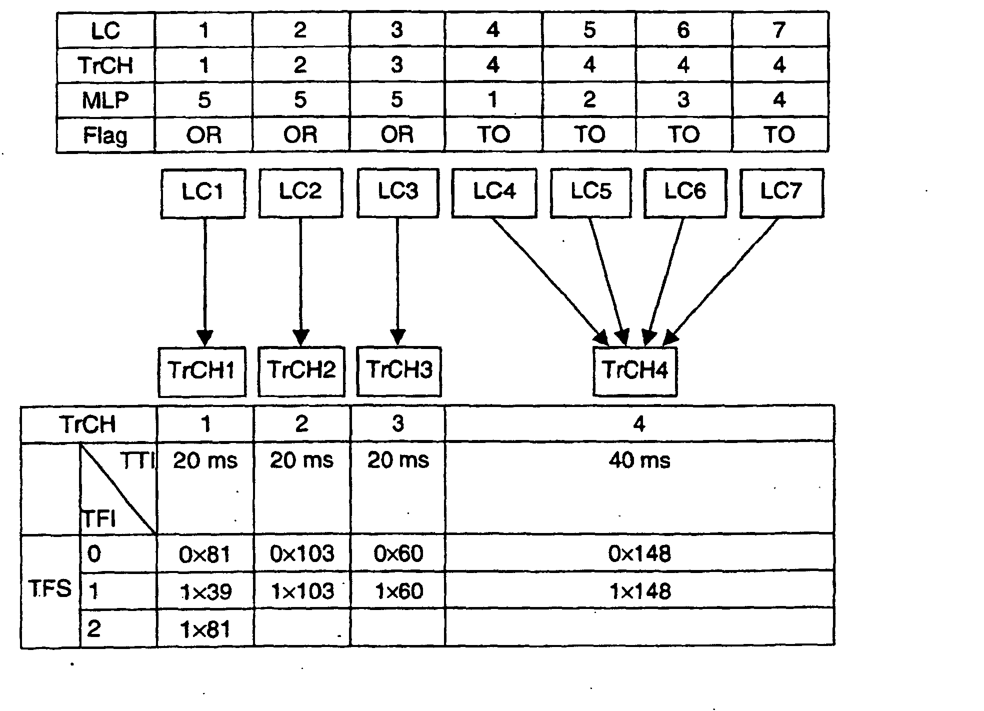

The above table gives, for each transport channel, the duration of its TTI interval and the associated TFS set. The transport formats in a TFS set are tagged with an index denoted TFI. This configuration of the medium access control unit is very important within the context of UMTS since it corresponds to a speech service. The transport channels TrCH1, TrCH2 and TrCH3 are responsible for transmitting speech and the transport channel TrCH4 is responsible for transmitting signalling data. The logical channels LC1, LC2 and LC3 are associated with the transport channels TrCH1, TrCH2 and TrCH3 respectively. The logical channels LC4, LC5, LC6 and LC7 are associated with transport channel TrCH4. The logical channels transporting the signalling data have priority over the logical channels transporting speech. The signalling data consist for example of information pertaining to the quality of the radio link.

To select a combination of transport formats, the medium access control unit is also furnished with a set E of possible combinations of transport formats, which is represented below in the form of a table:

| TrCH | TrCH1 | TrCH2 | TrCH3 | TrCH4 | Meaning |
|---|---|---|---|---|---|
| TFI | 0 | 0 | 0 | 0 | No data transmitted |
| | 1 | 0 | 0 | 0 | Transmission of data in silence |
| | 2 | 1 | 1 | 0 | Transmission of data in speech mode |
| | 0 | 0 | 0 | 1 | Transmission of signalling data |
| | 1 | 0 | 0 | 1 | Transmission of data in silence mode + signalling data |
| | 2 | 1 | 1 | 1 | Transmission of data in speech mode + signalling data |

Hereinbelow, a combination of transport formats is represented either by the list of indices TFI of the transport formats in the sets TFS of the corresponding transport channels, for example (0,0,0,0), or by the list of transport formats, for example (0x81,0x103,0x60,0x148). The symbol « * » is used to designate a TFI index or any transport format. In the table above, each row corresponds to a combination of transport formats which is represented by a list of TFI indices.

It should be noted that the combinations of transport formats of the type (1,1,1,*) are not defined. It will therefore not be possible to simultaneously transmit 1 block of 39 bits on transport channel TrCH1, 1 block of 103 bits on transport channel TrCH2 and 1 block of 60 bits on transport channel TrCH3. The only combinations of transport formats which are possible for transmitting data relating to a conversation are of the type:
- (0x39, 0x103, 0x60,*) to transmit silence (the speaker is not talking), the silence being generated from the last silence indicator transmitted;
- (1x39, 0x103, 0x60,*) for transmitting data corresponding to a silence indicator (the speaker is not talking);
- (1x81, 1x103, 1x60,*) for transmitting data corresponding to voice.

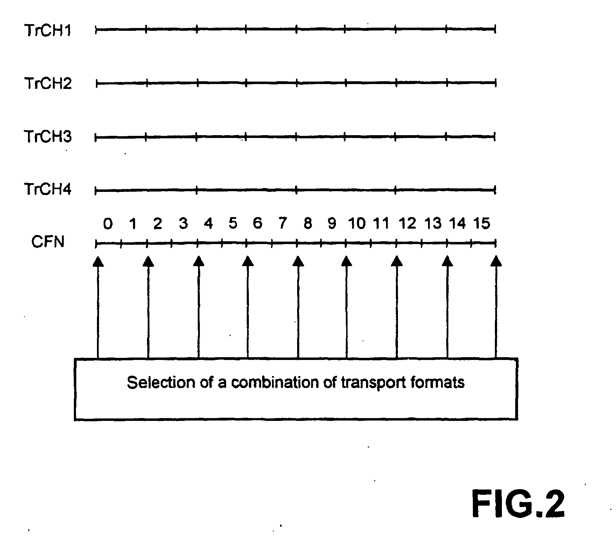

The selecting of combinations of transport formats also complies with a few rules illustrated with reference to Figure 2:
- selection is carried out at the start of each so-called reference TTI interval; the reference TTI intervals designate the TTI intervals of the transport channel or channels whose TTI interval duration is the smallest; in the example of Figure 2, the reference TTI intervals designate the TTI intervals of transport channels TrCH1, TrCH2 and TrCH3; selection of combinations of transport formats is therefore carried out at the start of the radio frames numbered 0, 2, 4, 6...
- the logical channels relevant to the selection at the start of a reference TTI interval are those whose associated transport channels exhibit a TTI interval the start of which coincides with the start of the said reference TTI interval; for example, at the start of radio frame 2, the logical channels relevant to the selection are the logical channels associated with transport channels TrCH1 TrCH2 and TrCH3, that is to say logical channels LC1, LC2 and LC3.
- the selected combination of transport formats must belong to a set of valid combinations of transport formats; certain combinations of transport formats may in fact be rendered invalid temporarily by the RRC radio resources control unit or the medium access control unit.
- for a given TTI interval, a transport channel can only transmit data blocks of same size corresponding to the corresponding block size of the transport format within the selected combination of transport formats; thus, in the case where two logical channels associated with the same transport channel have data blocks of different sizes, it will not be possible to transmit these blocks during the same TTI interval.
- the selected combination of transport formats must be matched with the quantity of data available (NB and BS) in the RLC entities of the logical channels in TM mode; the blocks assigned to a transport channel from a logical channel in TM mode must actually be available on the associated RLC entity.
- the selected combination of transport formats must correspond as far as possible with the data available (NbBits) in the RLC entities of the logical channels in AM or UM mode; for a logical channel in AM or UM mode, it is possible for a number of blocks which is greater than the number of blocks required to transmit the available bits (NbBits) in the RLC entity to be assigned to the associated transport channel; padding bits can in particular be introduced into the blocks to complete them; the optimal transport format (number of blocks, size of block) is the transport format giving the smallest product (number of blocks x valid size of block) which is greater than or equal to NbBits; it is not permissible to choose a transport format such that ((number of blocks - 1) x size of block) is greater than or equal to NbBits (the number of padding bits must be less than the size of a block).

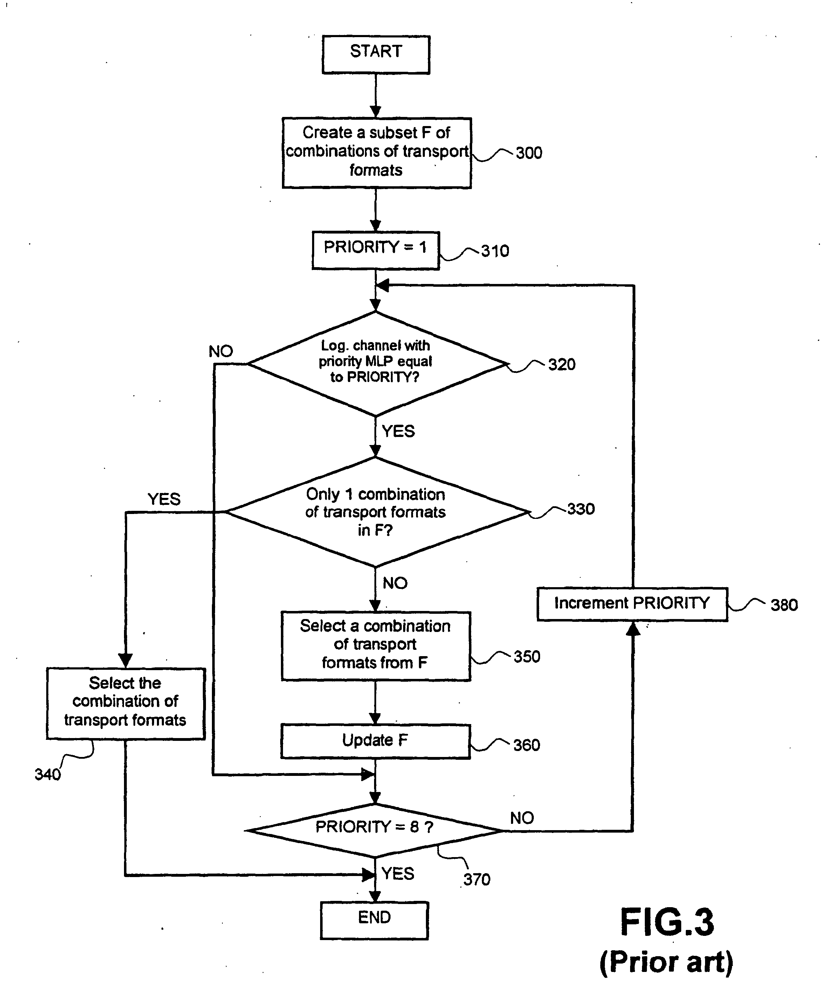

Thus, by following these rules, the selecting of a combination of transport formats is carried out at present as follows. This selection is illustrated in detail by Figure 3. It is carried out at the start of each reference TTI interval. In a first step (step 300), a subset F of combinations of transport formats is created, comprising the valid combinations of transport formats of the set E which have, for the transport channels, the start of whose current TTI interval does not coincide with the start of the current reference TTI interval, a transport format complying with that which is used to dispatch data during the said current TTI interval. For example, in Figure 2, if the transport format of transport channel TrCH4 during its first TTI interval is regarded as being the format with index 1 in the TFS set of transport formats which is associated with this transport channel, then, at the start of the radio frame numbered 2, the subset F will comprise the valid combinations of transport formats of the set E which comprise the transport format of index 1 for transport channel TrCH4.

During selection, the logical channels are processed in ascending order of their priority values MLP, that is to say in descending order of their degrees of priority. This is why a variable, denoted PRIORITY, representative of a degree of priority value is initialized (step 310) to 1. A check (step 320) is made as to whether there is at least one logical channel whose degree of priority MLP is equal to PRIORITY. If none exists, we go to the logical channels of higher priority, that is to say of lower degrees of priority. If there is at least one logical channel of priority value MLP equal to PRIORITY, a check (step 330) is made as to whether the number of combinations of transport formats contained in the subset F is equal to 1. If the latter comprises a single combination of transport formats, then this combination of transport formats is selected (step 340) and selection is then terminated. Otherwise, if the subset F comprises several combinations of transport formats, then the combination of transport formats of the subset F which makes it possible to transmit the largest possible quantity of data for the logical channels of degree of priority equal to PRIORITY is selected (step 350). The subset F is then reduced (step 360) to the combinations of transport formats making it possible to transmit a quantity of data which is at least equivalent to that of the previously selected combination of transport formats. The subset F thus reduced comprises at least the combination of transport formats which was selected during the step referenced 350. Next, a check (step 370) is made as to whether the value PRIORITY is equal to 8. If it is, selection is terminated and the selected combination of transport formats is the combination of transport formats which was selected during the step referenced 350. If it is not, that is to say if the value PRIORITY is not equal to 8, the value PRIORITY is incremented (step 380) by 1 and the selection steps referenced 320 to 370 are repeated.

At the end of selection, the selected combination of transport formats is generally that making it possible to transmit a maximum of data in the transport channels, i.e. for example the combination (2,1,1,1) of the set E defined earlier. However, there are situations where certain combinations of transport formats can no longer be used and become invalid. It may then happen that logical channels of low priority value MLP prevent logical channels of higher priority value MLP from transmitting their data during several consecutive TTI intervals, the consequence of this being to degrade the quality of service of the corresponding applications. These problems generally occur when the radio resources fixed initially by the network decrease temporarily for miscellaneous reasons.

For example, going back to the previous table of combinations of transport formats, a change in the transmission conditions may temporarily disallow bit rates greater than 488 bits (the bit rates are calculated over an interval of 40 ms whose duration corresponds to the duration of the largest TTI interval among the TTI intervals of the transport channels TrCH1, TrCH2, TrCH3 and TrCH4).
We then have:

| TFCI | Combination | Bit rate | Status |
|---|---|---|---|
| 0 | ( 0, 0, 0, 0) | 0 | Valid |
| 1 | ( 1, 0, 0, 0) | 78 | Valid |
| 2 | ( 2, 1, 1, 0) | 488 | Valid |
| 3 | (0, 0, 0, 1) | 148 | Valid |
| 4 | (1, 0, 0, 1) | 226 | Valid |
| 5 | (2, 1, 1, 1) | 636 | Invalid |

In this table, each combination of transport formats in the set E of combinations of transport formats is tagged by an index TFCI (standing for Transport Format Combination Indicator).

In this example, it is no longer possible to transmit signalling data and data in speech mode simultaneously. Indeed, the rules defined above imply that, as soon as data are available on the signalling logical channels LC4, LC5, LC6 and LC7, the voice logical channels LC2 and LC3 can no longer transmit data since the logical channels LC4, LC5, LC6 and LC7 have priority. This is especially adverse for a real-time service such as a speech service since, in order for the latter to be catered for correctly, the data blocks must be transmitted at each TTI interval.

### Summary of the invention:

An aim of the invention is in particular to propose a method for selecting a combination of transport formats making it possible to avoid the blocking situations mentioned above.

Moreover, the selection described earlier remains vague as regards the order to be complied with when processing two logical channels of same priority value MLP. This selection is therefore not satisfactory since it is not precise enough.

Also, another aim of the invention is to propose a method for selecting a combination of transport formats defining a rule intended to optimize the quality of service of the applications of logical channels of same priority value MLP.

The subject of the invention is a method for selecting a combination of transport formats for a composite channel comprising at least two transport channels with a view to the transmission of data conveyed by said transport channels, said combination of transport formats being comprised within a predetermined set E of combinations of transport formats, each combination of transport formats comprising a transport format for each of said at least two transport channels, the data to be transmitted originating from logical channels, each logical channel being associated with a single transport channel, each logical channel having a degree of priority with respect to the other logical channels, the data being transmitted within said transport channels during consecutive transmission time intervals, each transmission time interval exhibiting a duration specific to the transport channel to which it pertains, said selection of combination of transport formats being implemented at the start of reference transmission time intervals, said reference transmission time intervals designating the transmission time intervals of the transport channel having the smallest duration of transmission time interval,
characterized in that it comprises:
- a configuration phase, said configuration phase comprising, for each logical channel LCj, a first allocation step, said first allocation step consisting in allocating to the logical channel considered a time window size expressed as a number N of transmission time intervals and a minimum bit rate representing a minimum quantity of data to be transmitted within the associated transport channel during a period of time corresponding to a number N+1 of consecutive transmission time intervals, said consecutive transmission time intervals pertaining to the associated transport channel, and
- a selection phase, said selection phase comprising a step of selecting a combination of transport formats at the start of each of said reference transmission time intervals, said selection step taking into account on the one hand the set of said sizes N of time windows allocated and on the other hand the set of said allocated minimum bit rates.

The selection step of the selection phase comprises, for example, the following preparatory steps:
a) a first preparatory step consisting in creating a subset F of combinations of transport formats comprising the combinations of transport formats which are valid of said set E of combinations of transport formats, said subset F of combinations of transport formats comprising, for the transport channels, the start of which current transmission time interval does not coincide with the start of the current reference transmission time interval, a transport format in accordance with that used during said current transmission time interval,
b) a second preparatory step consisting in defining, for each of the logical channels for which the start of the current reference transmission time interval coincides with the start of a transmission time interval of the associated transport channel, a time window comprising the current transmission time interval of the associated transport channel and the N previous transmission time intervals, and in calculating the quantity of data transmitted within the associated transport channel during the first N transmission time intervals of the time window.

The selection step of the selection phase furthermore comprises a step of first iteration, said step of first iteration following upon said preparatory steps, said step of first iteration consisting in selecting a combination of transport formats from said subset F of combinations of transport formats making it possible to transmit, during said time window, for each of the logical channels relevant to said second preparatory step, or, by default, for the logical channels the degree of priority of which is the highest within the associated transport channels, the smallest quantity of data which is greater than or equal to that corresponding to the minimum bit rate allocated to the logical channel considered, the logical channels being scanned according to an order of scan, said order of scan complying with the descending order of the degrees of priority of the logical channels concerned by said second preparatory step.

The step of first iteration then comprises, for each logical channel concerned by said second preparatory step, said logical channels being processed according to said order of scan, the following steps:
- selecting a combination of transport formats from said subset F of combinations of transport formats making it possible to transmit, during the time window, within the associated transport channel, the smallest quantity of data which is greater than or equal to that corresponding to the minimum bit rate or, by default, the largest possible quantity of data, and
- reducing the subset F of combinations of transport formats to the combinations of transport formats making it possible to transmit, during the time window, a quantity of data which is greater than or equal to that of the selected combination of transport formats, the resulting subset F of combinations of transport formats being used for the processing of the logical channel if the case arises.

Advantageously, the configuration phase furthermore comprises, for each logical channel, a second allocation step, said second allocation step consisting in allocating to the logical channel concerned a nominal bit rate representing a nominal quantity of data to be transmitted during a period of time corresponding to N+1 consecutive transmission time intervals, said consecutive transmission time intervals pertaining to the associated transport channel, said nominal quantity of data being greater than or equal to said minimum quantity of data.

The selection step of the selection phase then furthermore comprises, following upon said step of first iteration, a step of second iteration in which a combination of transport formats is selected from said subset F of combinations of transport formats making it possible to transmit, during said time window, for each of the logical channels relevant to said second preparatory step, or, by default, for the logical channels the degree of priority of which is the highest within the associated transport channels, the largest quantity of data which is less than or equal to that corresponding to the nominal bit rate allocated to the logical channel considered.

This step of second iteration consists, for example, in performing, for each logical channel concerned by said second preparatory step, said logical channels being processed according to said order of scan, the following steps:
- selecting a combination of transport formats from said subset F of combinations of transport formats making it possible to transmit, during the time window, within the associated transport channel, the largest quantity of data which is less than or equal to that corresponding to the nominal bit rate, and
- reducing said subset F of combinations of transport formats to the combinations of transport formats making it possible to transmit, during the time window, a quantity of data which is greater than or equal to that of the selected combination of transport formats, the resulting subset F of combinations of transport formats being used for the processing of the logical channel if the case arises.

The selection step of the selection phase may furthermore comprise, following upon the first iteration step or the step of second iteration, a step of third iteration in which a combination of transport formats is selected from the subset F of combinations of transport formats making it possible to transmit, during said time window, for each of the logical channels concerned by said second preparatory step, or, by default, for the logical channels the degree of priority of which is the highest within the associated transport channels, the quantity of data available within the logical channels considered.

Said step of third iteration then consists in performing, for each logical channel concerned by said second preparatory step, said logical channels being processed according to said order of scan, the following steps:
- selecting a combination of transport formats from said subset F making it possible to transmit, during said time window, within the associated transport channel, the quantity of data available within the logical channel considered, and
- reducing said subset F of combinations of transport formats to the combinations of transport formats making it possible to transmit, during said time window, a quantity of data which is greater than or equal to that of the selected combination of transport formats, the resulting subset F of combinations of transport formats being used for the processing of the next logical channel.

In a more enhanced embodiment, the selection step of the selection phase furthermore comprises a third preparatory step, said third preparatory step consisting in modifying said order of scan in such a way as to order the logical channels of same degree of priority as a function of a state parameter representative of the quantity of data transmitted during the last selection step concerning the logical channel considered. In this case, the selection step advantageously comprises an updating step following upon the last iteration step and consisting in updating the STATE parameter of each logical channel concerned by said second preparatory step by calculating the quantity of data transmitted during the previous N transmission time intervals and said current transmission time interval and by comparing said calculated quantity of data with said minimum bit rate of the concerned logical channel. The calculated quantity of data can also be compared with said nominal bit rate of the concerned logical channel.

The subject of the invention is also a mobile station of a telecommunication system characterized in that it comprises a device implementing the method for selecting a combination of transport formats as defined above.

### Drawing description :

Other characteristics and advantages of the invention will become apparent on reading the following description of a preferred embodiment of the invention, given by way of simple example and with reference to the appended drawings, in which:
- Figure 1, already described, shows the data exchanged between the first two layers of an item of telecommunication equipment such as a mobile station;
- Figure 2, already described, represents the transmission time intervals (TTI) of a composite channel formed of four transport channels;
- Figure 3, already described, depicts a flowchart of a method for selecting a combination of transport formats of the prior art;
- Figure 4 represents a simplified flowchart of a preferred embodiment of the method according to the invention, for selecting a combination of transport formats;
- Figures 5A and 5B represent a simplified flowchart of a particular embodiment of the selection step of the method of the invention of Figure 4, Figure 5B being the continuation of Figure 5A.

### Detailed description:

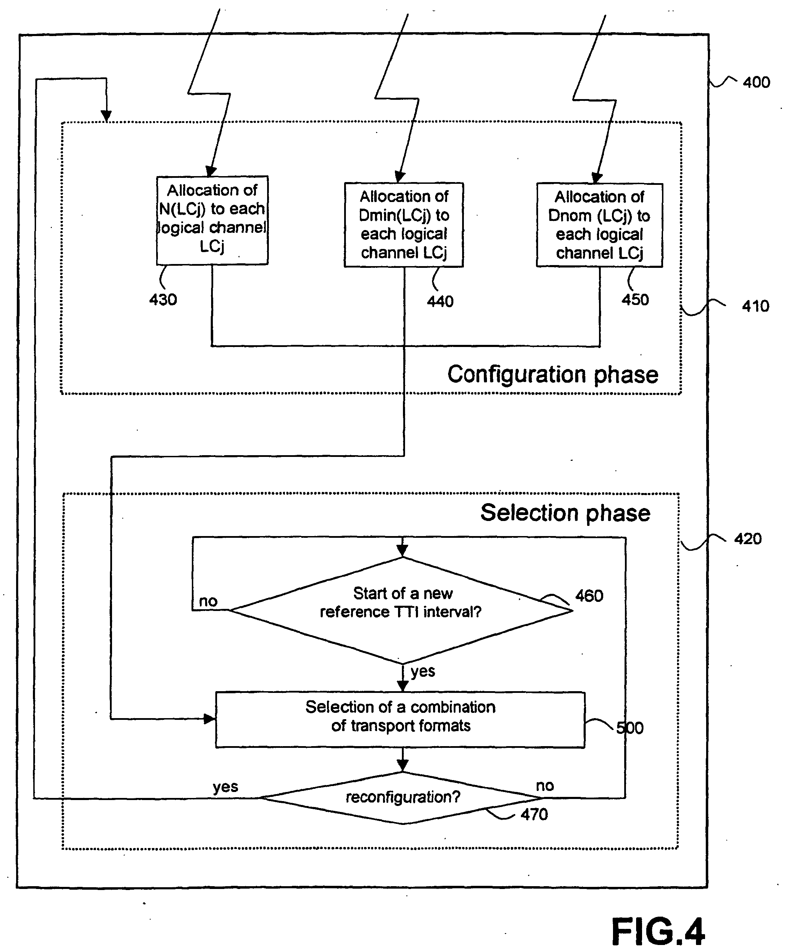

In general, and as depicted in the flowchart of Figure 4, the method for selecting a combination of transport formats according to the invention, referenced 400, comprises a configuration phase 410 and a selection phase 420.

The configuration phase 410 comprises, for each logical channel LCj, a step of allocating at least two new parameters, a time window size denoted N(LCj), and a minimum bit rate denoted Dmin(LCj) and the selection phase 420 comprises at least one step 500 of selecting a combination of transport formats which takes account of the set of pairs of parameters N(LCj) and Dmin(LCj) allocated during the configuration phase 410.

Also, the step of allocating parameters is split up for example into:
- a step 430 of allocation of a first parameter N(LCj) representing a time window size expressed as a number N of transmission time intervals TTI, and
- a step 440 of allocating a second parameter Dmin(LCj) relating to a minimum bit rate representing a minimum quantity of data to be transmitted within the associated transport channel over a duration corresponding to the previous N transmission time intervals TTI increased by one unit for the current transmission time interval concerned. The transmission time intervals concerned are therefore consecutive and relate to the associated transport channel.

The parameters N(LCj) and Dmin(LCj) are data integer numbers. The minimum bit rate is a number of bits to be transmitted on the logical channel during a time window formed of N(LCj)+1 intervals TTI of the associated transport channel.

It should be noted that, during the configuration phase 410 and the selection phase 420, the method of the invention for selecting a combination of transport formats also considers the parameters (not represented in the figure) relating to the priority values MLP assigned to the logical channels to be taken into account in selecting a combination of transport formats and those (not represented in the figure) relating to the configuration of the transmission itself.

Thus, according to the invention, one firstly seeks to select a combination of transport formats making it possible to guarantee a minimum bit rate, for each logical channel considered during the selecting of the combination of transport formats. Thus, the set of logical channels (including the logical channels exhibiting the lowest degrees of priority) can transmit a minimum of data over a specified duration. Stated otherwise, the method of the invention makes it possible to share, in an optimal manner, the resource available at the level of the transport channels so as to transport the data present within the corresponding logical channels.

The time window size values and the minimum bit rate values for the set of logical channels to be considered in selecting a combination of transport formats can be supplied for example by the network to the item of telecommunication equipment concerned. To do this, the network has previously determined these values for example as a function of the quality of service required by the various applications associated with the logical channels relevant to the method for selecting a combination of transport formats. Thus, the time window size values and the minimum bit rate values are determined in such a way as to ensure minimum operation of the corresponding service when the service is supported by a single logical channel. Likewise, when the service is supported by several logical channels, the time window size values and the minimum bit rate values specific to the set of logical channels involved are determined in such a way as to ensure minimum operation of the corresponding service.

Preferably, the configuration phase 410 furthermore comprises, for each logical channel LCj, a step 450 of allocating a nominal bit rate denoted Dnom(LCj). This nominal bit rate specific to the relevant logical channel represents a nominal quantity of data to be transmitted, over a duration corresponding to N transmission time intervals and followed by the current transmission time interval. Just as for the minimum bit rate of the logical channel concerned, the transmission time intervals considered are therefore consecutive and relate to the associated transport channel. On the other hand, the nominal quantity of data to be transmitted is greater than or equal to the minimum quantity of data to be transmitted, as represented by the minimum bit rate specific to the same logical channel concerned.

As regards the selection phase 420, it begins with a step 460 aimed at determining whether one is at the start of a new reference transmission time interval. If such is the case, the step 500 of selecting a combination of transport formats proper is executed for the reference transmission time interval concerned. Thus, the selecting of combination of transport formats is performed only at the start of each new reference transmission time interval. The data present in the logical channels are then transmitted in accordance with the combination of transport formats selected during this step. Before performing a selection of combination of transport formats at the start of the next reference TTI interval, a check is carried out in a step referenced 470 as to whether the parameters N(LCj), Dmin(LCj) and Dnom(LCj) need to be reconfigured. If such is the case, the configuration phase 410 is repeated. Otherwise, the selection phase 420 is continued by repeating the selection step 500.

To select a combination of transport formats (step 500) which guarantees a minimum bit rate, and possibly a nominal bit rate, for a maximum number of logical channels, the steps described hereinbelow are performed at the start of each reference TTI interval.

### First preparatory step (510)

A subset F of combinations of transport formats is created, comprising the valid combinations of transport formats of the set E which have, for the transport channels, the start of whose current TTI interval does not coincide with the start of the current reference TTI interval, a transport format complying with that used during the said current TTI interval. It is recalled that the set E is the set of possible combinations of transport formats. This step is identical to that of the step referenced 300 (cf. Figure 3).

### Second preparatory step (515)

For this step, G designates the set of logical channels for which the start of the current reference TTI interval coincides with the start of a TTI interval of the associated transport channel. In this step, a time window comprising the current TTI interval and the previous N TTI intervals is defined, for each of the logical channels of the set G, and the quantity of data transmitted during the first N TTI intervals of this time window, by the associated transport channel, is calculated. For the moment, nothing has been transmitted in the current TTI interval (corresponding to the N+1^{th} TTI interval of the time window).

Once the calculation of the quantity of data transmitted during the first N TTI intervals of the time window has been performed, it is then possible to deduce from this, for the relevant logical channel, the quantity of data to be transmitted during the current TTI interval so as to attain the minimum bit rate Dmin. This quantity of data can be expressed as a number of data blocks or as a number of bits.

It should be noted that, for the logical channels corresponding to a real-time service, for which service no loss of data is tolerated, it is advisable to take N equal to zero, that is to say a time window formed of a single TTI interval. Let us assume conversely that a real-time service exhibits a nominal bit rate equal to a block of d bits per TTI interval, and that this service can tolerate the loss of one block every K TTI interval, it is then sufficient to put N = K-1, and Dmin = (K-1)×d. If, on the contrary, the service corresponding to the logical channel concerned permits a transmission delay, N is then advantageously greater than or equal to one.

### Step of first iteration

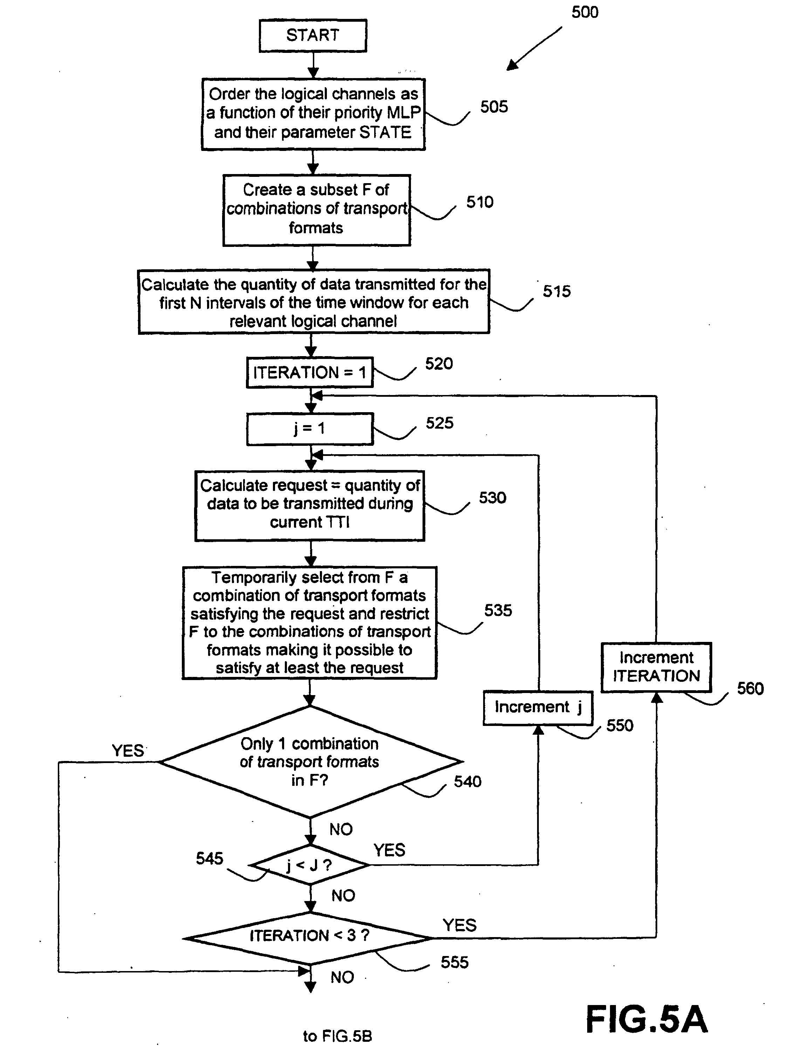

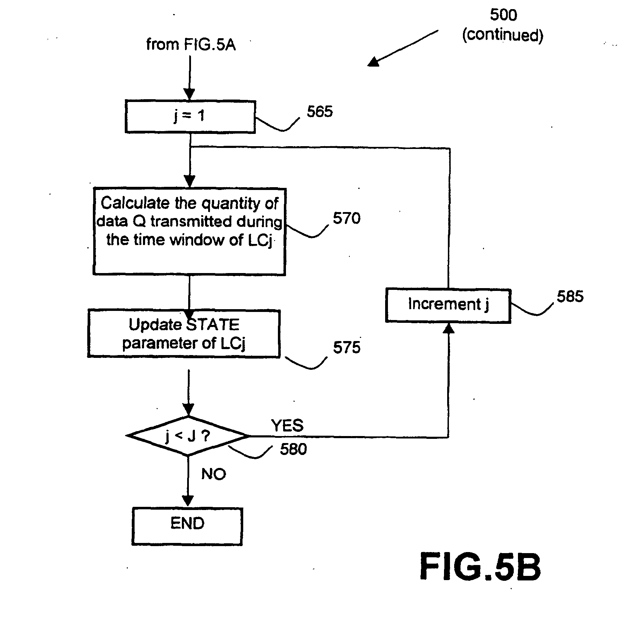

For each of the logical channels of the set G, a combination of transport formats is selected from the subset F making it possible to transmit during the associated time window the smallest quantity of data which is greater than or equal to that corresponding to the minimum bit rate for the associated transport channel. In this step, the logical channels are processed according to an order of scan corresponding to the ascending order of their priority values MLP (that is to say the descending order of their degrees of priority). Thus, the logical channels with priority value MLP equal to 1 are processed first, followed by those of priority value MLP equal to 2, and so on and so forth. If it is not possible to attain the minimum bit rate for all the logical channels of the set G, it is done at least for the logical channels of smallest priority value MLP of the set G. The step of first iteration is detailed later in the description with reference to Figures 5A and 5B. The result of this step of first iteration is to guarantee a minimum bit rate for the largest possible number of logical channels so as to avoid the blocking situations of the prior art.

The selecting of a combination of transport formats can be enhanced by subsequently searching for a combination of transport formats making it possible to guarantee a nominal bit rate for each of the logical channels of the set G. To do this, a supplementary step is performed, the so-called step of second iteration.

### Step of second iteration

A nominal bit rate Dₙₒₘ(LCj) representing a nominal quantity of data to be transmitted during N(LCj)+1 TTI intervals of the associated transport channel is allocated to each logical channel LCj of the set G. This nominal quantity of data is greater than or equal to the minimum quantity of data corresponding to Dₘᵢₙ(LCj). The value of the nominal bit rate of a logical channel is determined in such a way as to ensure normal operation of the corresponding service. Subsequent to the second preparatory step, the quantity of data transmitted during the first N TTI intervals of the time window of the associated transport channel is known for each logical channel of the set G. It is then possible to deduce from this, for the relevant logical channel, the quantity of data to be transmitted, during the current TTI interval, so as to attain the nominal bit rate. Also, for each logical channel of the set G, a combination of transport formats is selected, during this step of second iteration, from the subset F making it possible to transmit, during the associated time window, the largest quantity of data which is less than or equal to that corresponding to the nominal bit rate for the associated transport channel. If it is not possible to attain the nominal bit rate for all the logical channels of the set G, it is done at least for the logical channels of lowest priority value MLP of the set G.

The selecting of a combination of transport formats can be further enhanced by thereafter searching for a combination of transport formats making it possible to transmit, for each logical channel of the set G, all the data available in the corresponding RLC entity. This search can form the subject of a supplementary step, the so-called step of third iteration.

During the previous steps of first, second and third iteration, the logical channels are processed in the ascending order of their priority values MLP. It is noted that, in these steps, the order of the logical channels is very important since, if it is not possible to guarantee a minimum bit rate and possibly a nominal bit rate for all the logical channels, it is done at least for the logical channels of lowest priority value MLP (that is to say of highest degree of priority). There is then an indeterminacy in the order to be complied with when two logical channels have the same priority value MLP.

This is why, according to the invention, a parameter STATE(LCj) representative of the state of the corresponding logical channel LCj during the past time window is defined. The parameter STATE(LCj) can take, for the logical channel concerned, one of the following 4 values:
- "nominal": all the data contained in the associated RLC entity have been transmitted;
- "short": the quantity of data transmitted is less than the minimum bit rate Dₘᵢₙ of the relevant logical channel and the data contained in the associated RLC entity have not all been transmitted;
- "satisfied": the quantity of data transmitted is greater than or equal to the minimum bit rate Dₘᵢₙ and less than the nominal bit rate Dₙₒₘ of the relevant logical channel and the data contained in the associated RLC entity have not all been transmitted;
- "abundancy": the quantity of data transmitted is greater than the nominal bit rate Dₙₒₘ of the relevant logical channel.

The STATE parameter is used to mutually order the logical channels of same priority value MLP during a third preparatory step referenced 505. For the requirements of the method of the invention, the channels of same priority value MLP are ordered in the following manner from "highest priority" to "lowest priority":
- "short" - "satisfied" - "abundancy" - "nominal". Specifically, the processing of a "short" logical channel needs to take priority over that of the logical channels having STATE parameter value "satisfied", "abundancy" or "nominal". In the rare cases where two logical channels of same priority value MLP have the same STATE parameter, they are processed in an arbitrary order, for example in the ascending order of their indices in the logical channels list given by the RRC radio resources control unit.

A flowchart representing the operations to be performed for implementing a particular embodiment of the invention is shown in Figures 5A and 5B, Figure 5B being the continuation of Figure 5A. To implement this method, the network supplies the medium access control unit with the following parameters for each logical channel: the minimum bit rate, the nominal bit rate, the quantity of data available in the corresponding RLC entity and the size of the time window.

In this embodiment, firstly, the logical channels relevant to the selection are sorted in ascending order of their priority values MLP (that is to say in descending order of their degrees of priority) and, for the channels of same priority value MLP, in the order defined earlier as a function of their STATE parameter (step 505). J designates the number of logical channels relevant to the selection and the logical channels are referenced by an index j which increases as the ordered list of logical channels is scanned from the "highest priority" logical channel to the "lowest priority" logical channel.

A subset F of combinations of transport formats as specified earlier in the first preparatory step is created in a step 510. Next, the quantity of data transmitted during the first N transmission intervals of the time window is calculated, in a step 515, for the logical channels, the start of whose current reference TTI interval coincides with the start of the TTI interval of the associated transport channel. Next, in a first iteration (ITERATION=1), a first operation of temporary selection of a combination of transport formats is carried out, aimed at guaranteeing a minimum bit. rate for a maximum number of logical channels, and then in a second iteration (ITERATION=2) a second operation of temporary selection of a combination of transport formats is carried out, aimed at guaranteeing a nominal bit rate for a maximum number of logical channels, and in a third iteration (ITERATION=3) a third operation is carried out, aimed at temporarily selecting a combination of transport formats making it possible to transmit, for a maximum number of logical channels, all the data available in the corresponding RLC entities.

According to a variant embodiment, only the first iteration and the third iteration are performed. According to this variant, when the first operation of temporary selection of a combination of transport formats aimed at guaranteeing a nominal bit rate for a maximum number of logical channels is completed, the variable ITERATION then takes the value 3, and a selection operation is performed making it possible to transmit, for a maximum number of logical channels, all the data available in the corresponding RLC entities.

To carry out these three iterations of temporary selection, the three operations described hereinbelow are performed. To carry out the first iteration, a variable ITERATION is initialized to 1 (step 520) and the index j is likewise initialized to 1 (step 525). Next, a request corresponding to the quantity of data to be transmitted during the current TTI interval of the associated transport channel so that the quantity of data transmitted during the time window of the logical channel attains the minimum bit rate is calculated for the first logical channel (of highest priority) (step 530). This request is a number of blocks if the MODE parameter of the logical channel concerned is TM and a number of bits if the MODE parameter of the logical channel concerned is AM or UM. To determine this request, the difference is calculated between the minimum bit rate and the bit rate transmitted by the logical channel concerned during the previous N transmission time intervals of the associated transport channel. In the case of an AM or UM mode, the request corresponds to the difference calculated above. In the case of a TM mode, the request is then equal to the smallest number of blocks such that the product of the number of blocks times the block size requested by the corresponding RLC entity is greater than or equal to the difference calculated above. Next, a combination of transport formats satisfying the request is temporarily selected, from the subset F, and then the subset F is restricted to the combinations of transport formats making it possible to satisfy the request (step 535). The temporarily selected combination is preferably the combination of transport formats making it possible to transmit the smallest quantity of data which is greater than or equal to that corresponding to the minimum bit rate for the associated transport channel.

To carry out the second iteration of temporary selection, the variable ITERATION is updated to 2 by incrementing it (step 560) and the index j is reinitialized to 1 (step 525). Next, a request corresponding to the quantity of data to be transmitted during the current TTI interval of the associated transport channel so that the quantity of data transmitted during the time window of the logical channel is less than the nominal bit rate is calculated for the first logical channel (of highest priority). This request is a number of blocks if the MODE parameter of the logical channel concerned is TM and a number of bits if the MODE parameter of the logical channel concerned is AM or UM. As above, to determine this request, the difference is calculated between the nominal bit rate and the bit rate transmitted by the logical channel concerned during the previous N transmission time intervals of the associated transport channel. In the case of an AM or UM mode, the request corresponds to the difference calculated above. In the case of a TM mode, the request is then equal to the largest number of blocks such that the product of the number of blocks times the block size requested by the corresponding RLC entity is less than or equal to the difference calculated above. Next, a combination of transport formats satisfying the request is temporarily selected, from the subset F, and then the subset F is restricted to the combinations of transport formats making it possible to satisfy the request (step 535). The temporarily selected combination is preferably the combination of transport formats making it possible to transmit the largest quantity of data which is less than or equal to that corresponding to the nominal bit rate for the associated transport channel.

To carry out the third iteration of temporary selection, the variable ITERATION is next updated to 3 by incrementing it (step 560) and the index j is reinitialized to 1 (step 525). Next, a request corresponding to the quantity of data to be transmitted during the current TTI interval of the associated transport channel so that the quantity of data transmitted during the time window of the logical channel is less than the nominal bit rate is calculated (step 530) for the first logical channel (of highest priority). This request is a number of blocks if the MODE parameter of the logical channel concerned is TM and a number of bits if the MODE parameter of the logical channel concerned is AM or UM and corresponds to the quantity of data available on the associated RLC entity. Next, a combination of transport formats satisfying the request is temporarily selected (step 535) from the subset F and then the subset F is restricted to the combinations of transport formats making it possible to satisfy the request. The combination of transport formats which is selected at the end of the method is the last temporarily selected combination.

This step of temporary selection and of modification of the subset F (step 535) in fact consists in performing the following elementary steps:
- if no combination of transport formats has been selected in a temporary manner previously, considering that the temporarily selected combination of transport formats is the combination of transport formats transmitting no datum;
- taking the first combination of transport formats of the subset F, referred to as the current combination of transport formats;
   - considering the transport format of the current combination of transport formats corresponding to the logical channel concerned;
   - if the transport format satisfies the request added to the previous approved requests (that is to say those declared achievable) of the logical channels associated with the same transport channel, approving the request and retaining this request together with the requests already approved for the other logical channels;
   - otherwise
      - if the transport format transmits less data than the transport format of the temporarily selected combination of transport formats, deleting the current combination of transport formats from the subset F;
      - if, for the transport channel associated with the logical channel concerned, the block size of the transport format is different from the block size of the transport format of the temporarily selected combination of transport formats, and if the transport format of the temporarily selected combination of transport formats for the transport channel of the logical channel concerned actually transmits data (that is to say if the transport format comprises a block size and a number of blocks which are non-zero), deleting the current combination of transport formats from the subset F;

   - if, for all the transport formats of the current combination of transport formats, the transport format is identical to the transport format of the temporarily selected combination of transport formats or the transport format corresponds to the sum of the previously approved requests on this transport channel, then the current combination of transport formats is substituted for the temporarily selected combination of transport formats; then
- passing to the next combination of transport formats of the subset F and recommencing the previous steps.

During the selection method, if the subset F now comprises only one combination of transport formats, selection is halted, otherwise selection is continued by incrementing j (step 550). A request is thus calculated for each logical channel, and the subset F is restricted in tandem therewith until it now comprises only one combination of transport formats or until the three iterations corresponding to ITERATION = 1, ITERATION = 2 and ITERATION = 3 have been executed. The selected combination of transport formats is then the unique combination of transport formats of the subset F or the combination of transport formats of the subset F making it possible to transmit the largest possible quantity of data.

Thus, the final combination of transport formats which is selected at the end of the method is the last combination selected in a temporary manner.

After the step of selecting a combination of transport formats proper, there is also provision to calculate, in a step 570, for each logical channel, the quantity of data Q which will have been transmitted during the corresponding time window at the end of the current TTI interval of the associated transport channel. This quantity of data Q makes it possible to update the STATE parameter of the relevant logical channel during the next step referenced 575. The association of the last two steps 570 and 575 constitutes a step of updating the STATE parameters of the relevant logical channels. These STATE parameters will be used in the course of the next selection step 500, more precisely in the course of the preparatory step 505 of the next selection so as to mutually order the logical channels.

## Claims

1. A method for configuring a telecommunication system, said telecommunication system implementing a phase of communicating data conveyed by at least one transport channel, said transport channel being likely to transport data to be transmitted, said data originating from at least one logical channel, each of said at least one logical channel being associated with said transport channel, said data being transmitted within said transport channel during at least one transmission time interval,
**characterized in that** said method for configuring a telecommunication system comprises, for each of said at least one logical channel, a first allocation step (430, 440), said first allocation step allocating to the logical channel considered :
- a time window size, said time window size being expressed as a number N of transmission time intervals, and
- a minimum data rate, said minimum data rate representing a minimum quantity of data to be transmitted within said transport channel during a period of time corresponding to a number N+1 of transmission time intervals, said transmission time intervals pertaining to said transport channel.

2. The method for configuring a telecommunication system according to claim 1, **characterized in that** each of said at least one logical channel has a degree of priority with respect to the other logical channels.

3. The method for configuring a telecommunication system according to claim 1 or 2, **characterized in that** said method for configuring a telecommunication system comprises, for each of said at least one logical channel, a second allocation step (450), said second allocation step (450) allocating to the logical channel considered a nominal bit rate representing a nominal quantity of data to be transmitted during a period of time corresponding to N+1 transmission time intervals, said transmission time intervals pertaining to said transport channel, said nominal quantity of data being greater than or equal to said minimum quantity of data.

4. The method for configuring a telecommunication system according to any of claims 1 to 3, **characterized in that** said number N of transmission time intervals has a value which is greater than or equal to zero.

5. The method for configuring a telecommunication system according to any of claims 1 to 4, **characterized in that** said method for configuring a telecommunication system comprises, for each of said at least one logical channel, a third allocation step, said third allocation step allocating to the logical channel considered a state parameter, said state parameter being relative to the data having already been transmitted during a previous time window size.

6. The method for configuring a telecommunication system according to claim 5, **characterized in that** said state parameter is likely to have at least one value of the following values :
- nominal, said nominal value meaning that all the possible data have already been transmitted during said previous time window size ;
- short, said short value meaning that the quantity of data that have already been transmitted during said previous time window size is less than said minimum quantity of data to be transmitted within said transport channel ;
- satisfied, said satisfied value meaning that the quantity of data that have already been transmitted during said previous time window size is greater than or equal to said minimum quantity of data to be transmitted and less than said than nominal quantity of data to be transmitted within said transport channel ;
- abundancy, said abundancy value meaning that the quantity of data that have already been transmitted during said previous time window size is greater than said nominal quantity of data to be transmitted within said transport channel.

7. The method for configuring a telecommunication system according to any of claims 1 to 6, said phase of communicating data conveying data by at least two transport channels, each of said at least two transport channels being likely to transport data, a transport format being defined for each of said at least two transport channels, said transport format corresponding to a number of transport blocks and a size of each of said transport blocks, a combination of transport formats comprising a transport format for each of said at least two transport channels, said data originating from at least one logical channel, each of said at least one logical channel being associated with at least two transport channels of said at least two transport channels, said data being transmitted within one of said at least two transport channels during at least one transmission time interval, each of said at least one transmission time interval having a duration specific to one of said at least two transport channels,
said method for configuring comprising a selection phase (420), said selection phase (420) comprising a step of selecting a combination of transport formats, said step of selecting a combination of transport formats being implemented at the start of at least one reference transmission time interval, said at least one reference transmission time interval designating at least one transmission time interval of the transport channel having the smallest duration of transmission time interval, said step of selecting a combination of transport formats taking into account the time window size allocated to each of said at least one logical channel expressed as a number N of transmission time intervals for each of said at least two transport channels and the minimum data rate representing a minimum quantity of data to be transmitted within the associated transport channel during a period of time corresponding to a number N+1 of transmission time intervals for each of said at least two transport channels, said transmission time intervals pertaining to the associated transport channel.

8. The method for configuring a telecommunication system according to claim 7, **characterized in that** said step of selecting a combination of transport formats takes also into account a predetermined set E of combinations of transport formats.

9. A mobile station for communicating data conveyed by at least one transport channel, said transport channel being likely to transport data to be transmitted, said data originating from at least one logical channel, each of said at least one logical channel being associated with said transport channel, said data being transmitted within said transport channel during at least one transmission time interval,
**characterized in that** said mobile station for communicating data comprises, for each of said at least one logical channel, first allocation means, said first allocation means allocating to the logical channel considered:
- a time window size, said time window size being expressed as a number N of transmission time intervals, and
- a minimum data rate, said minimum data rate representing a minimum quantity of data to be transmitted within said transport channel during a period of time corresponding to a number N+1 of transmission time intervals, said transmission time intervals pertaining to said transport channel.

10. A method for configuring a mobile station communicating data, said data being conveyed by at least one transport channel, said transport channel being likely to transport data to be transmitted, said data originating from at least one logical channel, each of said at least one logical channel being associated with said transport channel, said data being transmitted within said transport channel during at least one transmission time interval,
**characterized in that** said method for configuring a mobile station comprises, for each of said at least one logical channel, a first allocation step (430, 440), said first allocation step (430, 440) allocating to the logical channel considered :
- a time window size, said time window size being expressed as a number N of transmission time intervals, and
- a minimum data rate, said minimum data rate representing a minimum quantity of data to be transmitted within said transport channel during a period of time corresponding to a number N+1 of transmission time intervals, said transmission time intervals pertaining to said transport channel.

## Patentansprüche

1. Verfahren zum Konfigurieren eines Telekommunikationssystems, wobei das Telekommunikationssystem eine Phase des Kommunizierens von Daten implementiert, die von mindestens einem Transportkanal befördert werden, wobei der Transportkanal zu übertragende Daten wahrscheinlich transportiert, wobei die Daten von mindestens einem logischen Kanal stammen, wobei jeder von dem mindestens einen logischen Kanal dem Transportkanal zugeordnet ist, wobei die Daten innerhalb des Transportkanals während mindestens eines Übertragungszeitintervalls übertragen werden,
**dadurch gekennzeichnet,**
**daß** das Verfahren zum Konfigurieren eines Telekommunikationssystems für jeden von dem mindestens einen logischen Kanal einen ersten Zuweisungsschritt (430, 440) aufweist, wobei der erste Zuweisungsschritt dem betreffenden logischen Kanal folgendes zuweist:
- eine Zeitfenstergröße, wobei die Zeitfenstergröße als eine Anzahl N von Übertragungszeitintervallen ausgedrückt wird, und
- eine Mindestdatenrate, wobei die Mindestdatenrate eine Mindestdatenmenge repräsentiert, die innerhalb des Transportkanals während einer Zeitdauer zu übertragen ist, die einer Anzahl N+1 von Übertragungszeitintervallen entspricht, wobei die Übertragungszeitintervalle zu dem Transportkanal gehören.

2. Verfahren zum Konfigurieren eines Telekommunikationssystems
nach Anspruch 1,
**dadurch gekennzeichnet,**
**daß** jeder von dem mindestens einem logischen Kanal in Bezug auf die anderen logischen Kanäle einen Prioritätsgrad hat.

3. Verfahren zum Konfigurieren eines Telekommunikationssystems
nach Anspruch 1 oder 2,
**dadurch gekennzeichnet,**
**daß** das Verfahren zum Konfigurieren eines Telekommunikationssystems für jeden von dem mindestens einen logischen Kanal einen zweiten Zuweisungsschritt (450) aufweist, wobei der zweite Zuweisungsschritt (450) dem betreffenden logischen Kanal eine Nominalbitrate zuweist, die eine Nominaldatenmenge repräsentiert, die während einer Zeitdauer zu übertragen ist, die N+1 Übertragungszeitintervallen entspricht, wobei die Übertragungszeitintervalle zu dem Transportkanal gehören und die Nominaldatenmenge größer als die oder gleich der Mindestdatenmenge ist.

4. Verfahren zum Konfigurieren eines Telekommunikationssystems
nach einem der Ansprüche 1 bis 3,
**dadurch gekennzeichnet,**
**daß** die Anzahl N von Übertragungszeitintervallen einen Wert hat, der größer als oder gleich Null ist.

5. Verfahren zum Konfigurieren eines Telekommunikationssystems
nach einem der Ansprüche 1 bis 4,
**dadurch gekennzeichnet,**
**daß** das Verfahren zum Konfigurieren eines Telekommunikationssystems für jeden von dem mindestens einen logischen Kanal einen dritten Zuweisungsschritt aufweist, wobei der dritte Zuweisungsschritt dem betreffenden logischen Kanal einen Zustandsparameter zuweist und wobei der Zustandsparameter sich auf die Daten bezieht, die bereits während einer vorherigen Zeitfenstergröße übertragen worden sind.

6. Verfahren zum Konfigurieren eines Telekommunikationssystems
nach Anspruch 5,
**dadurch gekennzeichnet,**
**daß** der Zustandsparameter wahrscheinlich mindestens einen Wert von den folgenden Werten besitzt:
- nominal, wobei ein Nominalwert bedeutet, daß alle die möglichen Daten bereits während der vorherigen Zeitfenstergröße übertragen worden sind;
- zu gering, wobei ein zu geringer Wert bedeutet, daß die Datenmenge, die bereits während der vorherigen Zeitfenstergröße übertragen worden ist, kleiner ist als die Mindestdatenmenge, die innerhalb des Transportkanals zu übertragen ist;
- zufriedenstellend, wobei ein zufriedenstellender Wert bedeutet, daß die Datenmenge, die bereits während der vorherigen Zeitfenstergröße übertragen worden ist, größer ist als die oder gleich der zu übertragenden Mindestdatenmenge und kleiner ist als die innerhalb des Transportkanals zu übertragende Nominaldatenmenge;
- Überschuß, wobei ein Überschuß-Wert bedeutet, daß die Datenmenge, die bereits während der vorherigen Zeitfenstergröße übertragen worden ist, größer ist als die innerhalb des Transportkanals zu übertragende Nominaldatenmenge.

7. Verfahren zum Konfigurieren eines Telekommunikationssystems
nach einem der Ansprüche 1 bis 6,
wobei die Phase des Kommunizierens von Daten Daten durch mindestens zwei Transportkanäle befördert, jeder von den mindestens zwei Transportkanälen wahrscheinlich Daten transportiert, wobei ein Transportformat für jeden von den mindestens zwei Transportkanälen definiert ist, wobei das Transportformat einer Anzahl von Transportblöcken und einer Größe von jedem von den Transportblöcken entspricht, wobei eine Kombination von Transportformaten ein Transportformat für jeden von den mindestens zwei Transportkanälen aufweist,
wobei die Daten von mindestens einem logischen Kanal stammen, wobei jeder von dem mindestens einen logischen Kanal mindestens zwei Transportkanälen von den mindestens zwei Transportkanälen zugeordnet ist, wobei die Daten innerhalb von einem von den mindestens zwei Transportkanälen während mindestens eines Übertragungszeitintervalls übertragen werden, wobei jedes von dem mindestens einen Übertragungszeitintervall eine Dauer hat, die spezifisch für einen der mindestens zwei Transportkanäle ist,
wobei das Verfahren zum Konfigurieren eine Auswahlphase (420) aufweist,
wobei die Auswahlphase (420) einen Schritt des Auswählens einer Kombination von Transportformaten aufweist, wobei der Schritt des Auswählens einer Kombination von Transportformaten zu Beginn von mindestens einem Referenz-Übertragungszeitintervall implementiert wird, wobei das mindestens eine Referenz-Übertragungszeitintervall mindestens ein Referenz-Übertragungszeitintervall des Transportkanals bezeichnet, das die kleinste Übertragungszeitintervall-Dauer hat, wobei der Schritt des Auswählens einer Kombination von Transportformaten die Zeitfenstergröße berücksichtigt, die jedem von dem mindestens einen logischen Kanal zugewiesen sind, und zwar ausgedrückt als eine Anzahl N von Übertragungszeitintervallen für jeden von den mindestens zwei Transportkanälen, und die Mindestdatenrate berücksichtigt, die eine Mindestdatenmenge repräsentiert, die innerhalb des zugeordneten Transportkanals während einer Zeitdauer zu übertragen ist, die einer Anzahl N+1 von Übertragungszeitintervallen für jeden von den mindestens zwei Transportkanälen eritspricht,
wobei die Übertragungszeitintervalle zu dem zugeordneten Transportkanal gehören.

8. Verfahren zum Konfigurieren eines Telekommunikationssystems
nach Anspruch 7,
**dadurch gekennzeichnet,**
**daß** der Schritt des Auswählens einer Kombination von Transportformaten weiterhin einen vorgegebenen Satz E von Kombinationen von Transportformaten berücksichtigt.

9. Mobilstation zum Kommunizieren von Daten, die von mindestens einem Transportkanal befördert werden, wobei der Transportkanal wahrscheinlich zu übertragende Daten transportiert, wobei die Daten von mindestens einem logischen Kanal stammen, wobei jeder von dem mindestens einen logischen Kanal dem Transportkanal zugeordnet ist, wobei die Daten innerhalb des Transportkanals während mindestens eines Übertragungszeitintervalls übertragen werden,
**dadurch gekennzeichnet,**
**daß** die Mobilstation zum Kommunizieren von Daten für jeden von dem mindestens einen logischen Kanal eine erste Zuweisungseinrichtung aufweist, wobei die erste Zuweisungseinrichtung dem betreffenden logischen Kanal folgendes zuweist:
- eine Zeitfenstergröße, wobei die Zeitfenstergröße als eine Anzahl N von Übertragungszeitintervallen ausgedrückt ist, und
- eine Mindestdatenrate, wobei die Mindestdatenrate eine Mindestdatenmenge repräsentiert, die innerhalb des Transportkanals während einer Zeitdauer zu übertragen ist, die einer Anzahl N+1 von Übertragungszeitintervallen entspricht, wobei die Übertragungszeitintervalle zu dem Transportkanal gehören.

10. Verfahren zum Konfigurieren einer Mobilstation, die Daten kommuniziert,
wobei die Daten von mindestens einem Transportkanal befördert werden; wobei der Transportkanal wahrscheinlich zu übertragende Daten transportiert, wobei die Daten von mindestens einem logischen Kanal stammen, wobei jeder von dem mindestens einen logischen Kanal dem Transportkanal zugeordnet ist,
wobei die Daten innerhalb des Transportkanals während mindestens eines Übertragungszeitintervalls übertragen werden,
**dadurch gekennzeichnet,**
**daß** das Verfahren zum Konfigurieren einer Mobilstation für jeden von dem mindestens einen logischen Kanal einen ersten Zuweisungsschritt (430, 440) aufweist, wobei der erste Zuweisungsschritt (430, 440) dem betreffenden logischen Kanal folgendes zuweist:
- eine Zeitfenstergröße, wobei die Zeitfenstergröße als eine Anzahl N von Übertragungszeitintervallen ausgedrückt ist, und
- eine Mindestdatenrate, wobei die Mindestdatenrate eine Mindestdatenmenge repräsentiert, die innerhalb des Transportkanals während einer Zeitdauer zu übertragen ist, die einer Anzahl N+1 von Übertragungszeitintervallen entspricht, wobei die Übertragungszeitintervalle zu dem Transportkanal gehören.

## Revendications

1. Procédé de configuration d'un système de télécommunication, ledit système de télécommunication mettant en oeuvre une phase de communication de données véhiculées par au moins un canal de transport, ledit canal de transport transportant vraisemblablement des données à transmettre, lesdites données provenant d'au moins un canal logique, chacun dudit au moins un canal logique étant associé audit canal de transport, lesdites données étant transmises au sein dudit canal de transport pendant au moins un intervalle temporel de transmission,
**caractérisé en ce que** ledit procédé de configuration d'un système de télécommunication comprend, pour chacun dudit au moins un canal logique, une première étape d'allocation (430, 440), ladite première étape d'allocation allouant au canal logique considéré:
- une taille de fenêtre temporelle, ladite taille de fenêtre temporelle étant exprimée par un nombre N d'intervalles temporels de transmission, et
- un débit de données minimal, ledit débit de données minimal représentant une quantité minimale de données à transmettre au sein dudit canal de transport pendant une période temporelle correspondant à un nombre N+1 d'intervalles temporels de transmission, lesdits intervalles temporels de transmission concernant ledit canal de transport.

2. Procédé. de configuration d'un système de télécommunication selon la revendication 1, **caractérisé en ce que** chacun dudit au moins un canal logique présente un degré de priorité par rapport aux autres canaux logiques.

3. Procédé de configuration d'un système de télécommunication selon la revendication 1 ou 2, **caractérisé en ce que** ledit procédé de configuration d'un système de télécommunication comprend, pour chacun dudit au moins un canal logique, une deuxième étape d'allocation (450), ladite deuxième étape d'allocation (450) allouant au canal logique considéré un débit de bits nominal représentant une quantité nominale de données à transmettre pendant une période temporelle correspondant à un nombre N+1 d'intervalles temporels de transmission, lesdits intervalles temporels de transmission concernant ledit canal de transport, ladite quantité nominale de données étant supérieure ou égale à ladite quantité minimale de données.

4. Procédé de configuration d'un système de télécommunication selon l'une quelconque des revendications 1 à 3, **caractérisé en ce que** ledit nombre N d'intervalles temporels de transmission a une valeur qui est supérieure ou égale à zéro.

5. Procédé de configuration d'un système de télécommunication selon l'une quelconque des revendications 1 à 4, **caractérisé en ce que** ledit procédé de configuration d'un système de télécommunication comprend, pour chacun dudit au moins un canal logique, une troisième étape d'allocation, ladite troisième étape d'allocation allouant au canal logique considéré un paramètre d'état, ledit paramètre d'état étant relatif aux données ayant déjà été transmises pendant une taille de fenêtre temporelle précédente.

6. Procédé de configuration d'un système de télécommunication selon la revendication 5, **caractérisé en ce que** ledit paramètre d'état a vraisemblablement au moins une valeur parmi les valeurs suivantes :
- "nominale ", ladite valeur "nominale" signifiant que toutes les données possibles ont déjà été transmises pendant ladite taille de fenêtre temporelle précédente ;
- "insuffisante", ladite valeur "insuffisante" signifiant que la quantité de données ayant déjà été transmise pendant ladite taille de fenêtre temporelle précédente est inférieure à ladite quantité minimale de données à transmettre au sein dudit canal de transport ;
- "satisfaite", ladite valeur "satisfaite" signifiant que la quantité de données ayant déjà été transmise pendant ladite taille de fenêtre temporelle précédente est supérieure ou égale à ladite quantité minimale de données à transmettre et inférieure à ladite quantité nominale de données à transmettre au sein dudit canal de transport ;
- "en abondance", ladite valeur "en abondance" signifiant que la quantité de données ayant déjà été transmise pendant ladite taille de fenêtre temporelle précédente est supérieure à ladite quantité nominale de données à transmettre au sein dudit canal de transport.

7. Procédé de configuration d'un système de télécommunication selon l'une quelconque des revendications 1 à 6, ladite phase de communication de données véhiculant des données véhiculées par au moins deux canaux de transport, chacun desdits au moins deux canaux de transport transportant vraisemblablement des données, un format de transport étant défini pour chacun desdits au moins deux canaux de transport, ledit format de transport correspondant au nombre de blocs de transport et d'une taille de chacun desdits blocs de transport, une combinaison de formats de transport comprenant un format de transport pour chacun desdits au moins deux canaux de transport, lesdites données provenant d'au moins un canal logique, chacun dudit au moins un canal logique étant associé à au moins deux canaux de transport desdits au moins deux canaux de transport, lesdites données étant transmises au sein d'un desdits au moins deux canaux de transport pendant au moins un intervalle temporel de transmission, chacun dudit au moins un intervalle temporel de transmission ayant une durée spécifique à un desdits au moins deux canaux de transport,
ledit procédé de configuration comprenant une phase (420) de sélection, ladite phase (420) de sélection comprenant une étape de sélection d'une combinaison de formats de transport, ladite étape de sélection d'une combinaison de formats de transport étant mise en oeuvre au début d'au moins un intervalle temporel de transmission de référence, ledit au moins un intervalle temporel de transmission de référence désignant au moins un intervalle temporel de transmission du canal de transport ayant la plus petite durée d'intervalle temporel de transmission, ladite étape de sélection d'une combinaison de formats de transport prenant en compte la taille de fenêtre temporelle allouée à chacun dudit au moins un canal logique exprimée par un nombre N d'intervalles temporels de transmission pour chacun dudit au moins deux canaux de transport et un débit de données minimum représentant une quantité minimale de données à transmettre au sein du canal de transport associé pendant une période temporelle correspondant à un nombre N+1 d'intervalles temporels de transmission pour chacun dudit au moins deux canaux de transport, lesdits intervalles temporels de transmission concernant le canal de transport associé.

8. Procédé de configuration d'un système de télécommunication selon la revendication 7, **caractérisé en ce que** ladite étape de sélection d'une combinaison de formats de transport prend également en compte un ensemble E prédéterminé de combinaisons de formats de transport.

9. Station mobile pour communiquer des données véhiculées par au moins un canal de transport, ledit canal de transport transportant vraisemblablement des données à transmettre, lesdites données provenant d'au moins un canal logique, chacun dudit au moins un canal logique étant associé audit canal de transport, lesdites données étant transmises au sein du canal de transport pendant au moins un intervalle temporel de transmission,
**caractérisé en ce que** ladite station mobile pour communiquer des données comprend, pour chacun dudit au moins un canal logique, des premiers moyens d'allocation, lesdits premiers moyens d'allocation allouant au canal logique considéré :
- une taille de fenêtre temporelle, ladite taille de fenêtre temporelle étant exprimée par un nombre N d'intervalles temporels de transmission, et
- un débit de données minimal, ledit débit de données minimal représentant une quantité minimale de données à transmettre au sein dudit canal de transport pendant une période temporelle correspondant à un nombre N+1 d'intervalles temporels de transmission, lesdits intervalles temporels de transmission concernant ledit canal de transport.

10. Procédé de configuration d'une station mobile communiquant des données, lesdites données étant véhiculées par au moins un canal de transport, ledit canal de transport transportant vraisemblablement des données à transmettre, lesdites données provenant d'au moins un canal logique, chacun dudit au moins un canal logique étant associé audit canal de transport, lesdites données étant transmises au sein dudit canal de transport pendant au moins un intervalle temporel de transmission,
**caractérisé en ce que** ledit procédé de configuration d'une station mobile comprend, pour chacun dudit au moins un canal logique, une première étape d'allocation (430, 440), ladite première étape d'allocation allouant au canal logique considéré :
- une taille de fenêtre temporelle, ladite taille de fenêtre temporelle étant exprimée par un nombre N d'intervalles temporels de transmission, et
- un débit de données minimal, ledit débit de données minimal représentant une quantité minimale de données à transmettre au sein dudit canal de transport pendant une période temporelle correspondant à un nombre N+1 d'intervalles temporels de transmission, lesdits intervalles temporels de transmission concernant ledit canal de transport.
